# EUROPÄISCHE PATENTSCHRIFT

(11) **EP 1 548 482 B1**
(45) Veröffentlichungstag und Bekanntmachung des Hinweises auf die Patenterteilung: **28.09.2011**
(21) Anmeldenummer: 04029779.8
(22) Anmeldetag: 16.12.2004
(51) Int. Cl.: G02B 21/02, G02B 7/02

(54) **Mikroskopobjektiv mit axial verstellbaren Korrekturfassungen**
Microscope objective with axially adjustable corrective mounts
Objectif pour un microscope avec des montures correctives axialement ajustables

(30) Priorität: 24.12.2003 DE 10361911
(43) Veröffentlichungstag der Anmeldung: 29.06.2005
(73) Patentinhaber: Carl Zeiss MicroImaging GmbH, 07745 Jena (DE)
(72) Erfinder: Fahlbusch, Ingo, 37077 Göttingen (DE); Mollenhauer, Gerhard, 37136 Landolfshausen (DE); Shi, Renhu, 37085 Göttingen (DE); Busse, Andreas, 37115 Duderstadt (DE); Herbst, Georg, 37085 Göttingen (DE); Günther, Thomas, 37077 Göttingen (DE); Wahl, Hubert, 07646 Stadtroda (DE); Dambeck, Marion, 37124 Rosdorf (DE); Wilhelm, Adolph, 37249 Neu-Eichenberg (DE); Hartje, Wolfgang, 37075 Göttingen (DE); Sebode, Wolfgang, 37115 Duderstadt (DE); Nolte, Detmar, 37139 Adelebsen (DE)
(74) Vertreter: Scholze, Humbert

(56) Entgegenhaltungen:
- EP-B- 0 660 942
- DE-A1- 10 209 403
- US-A- 3 549 230
- US-A- 4 993 815

## Beschreibung

Die Erfindung betrifft ein Mikroskopobjektiv mit axial verstellbaren Korrekturfassungen, in welchen Linsen bzw. Linsengruppen angeordnet sind, insbesondere zur Live Cell Imaging und für Forschungen an Zellen- und Gewebekulturen. Die Erfindung ist an Mikroskopobjektiven in Verbindung mit unterschiedlichen Deckgläsern und/oder unterschiedlichen Immersionsflüssigkeiten und/oder bei unterschiedlichen Arbeitstemperaturen anwendbar.

Mit solchen axialen Verstellungen von optischen Gliedern in Objektiven können verschiedenartige Korrekturen vorgenommen werden, um damit ein Mikroskopieren unter verschiedenen Bedingungen mit hoher Qualität und bei hohen Abbildungsmaßstäben zu ermöglichen.

In Mikroskopobjektiven ist die axiale Verstellung von in Korrekturfassungen angeordneten optischen Gliedern in Bezug auf feststehende optische Glieder auf unterschiedliche Weise realisiert.

So ist aus der DE 198 04 470 C1 ein Mikroskopobjektiv mit mehreren Linsengruppenfassungen bekannt, von denen eine als Korrekturfassung zur Anpassung an unterschiedliche Deckglasdicken ausgebildet und zur Positionsveränderung relativ zu feststehenden Linsenfassungen axial entlang der optischen Achse des Objektivs verschiebbar ist. Die axiale Verschiebung der Korrekturfassung erfolgt von einem um die optische Achse drehbaren Rändelring aus über einen Führungszapfen, welcher auf Kurvenringen läuft.

US 3,549,230 beschreibt ein ähnliches Linsensystem, bei dem die axiale Positionierung von Stellgliedern über einen Stellring vorgenommen wird. Dazu sind im Stellring Nuten eingebracht, in die Zapfen (Bolzen) eingreifen. Durch eine Drehbewegung des Stellringes wird eine axiale Längsbewegung der Stellglieder umgesetzt, wobei die Stellglieder über die Zapfen (Bolzen) den Nuten im Stellring folgen und dabei die Linsengruppen gleichzeitig rotieren. Ein wesentlicher Nachteil ist, dass der relativ komplizierte Aufbau zu Ungenauigkeiten in der optischen Übertragung führt.

In der DE 38 12 745 C2 ist ein Mikroskopobjektiv mit einer Apertur von mindestens 0,5 und einer Einrichtung zur Einstellung auf unterschiedliche Deckglasdicken beschrieben, bei welchem eine zwischen einer feststehenden ersten Linsengruppe und einer feststehenden dritten Linsengruppe eine zweite Linsengruppe linear verschiebbar angeordnet ist, zu welcher eine weitere Linsengruppe gegenläufig axial verschoben werden kann. Dabei können die Bewegungshübe dieser verschiebbaren Linsengruppen unterschiedlich sein. Zur Realisierung der Verschiebungen der entsprechenden Linsengruppen ist ein einziger Betätigungsring vorgesehen. Bei diesem Objektiv ist die Einrichtung zur Einstellung auf unterschiedliche Deckglasdicken mit einer Einrichtung zur Nachfokussierung des gesamten Objektivs gekoppelt. Die Linsengruppen werden im Zuge der Einstellbewegung linear verschoben. Dieses lässt sich beispielsweise durch Gewinde unterschiedlicher Steigung oder durch Nocken erreichen, welche in entsprechenden Nuten mit konstanter, jedoch unterschiedlicher Steigung in einen drehbaren Zwischenring der Linsenfassung eingreifen.

Aus der EP 0 660 942 B1 ist weiterhin ein Mikroskopobjektiv mit wenigstens einer Korrekturfassung bekannt, wobei die Korrekturfassung axial verschiebbar und um die optische Achse des Objektivs drehbar ist. Zur axialen Verschiebung und der gleichzeitigen radialen Drehung der Fassung ist ein auf einer Kurvennut eines Fassungsträgers bewegbarer Zapfen vorgesehen, welcher mit einem Ende fest mit der Korrekturfassung verbunden ist und mit dem anderen Ende in einen drehbaren Ring eingreift. Bei einem in dieser Druckschrift offenbarten Objektiv sind zwei axial verschiebbare und gleichzeitig drehbare Korrekturfassungen vorgesehen.

Eine Verstellvorrichtung für ein Objektiv ist in der DE 199 47 378 A1 beschrieben, welche mit einem axial beweglichen Optikglied versehen ist, das über eine Schiebefassung mit der Hauptfassung verbunden ist. Dabei ist ein erster Linearantrieb über Stellglieder mit einem zweiten Linearantrieb, welcher die Linearbewegung entlang der optischen Achse erzeugt, verbunden. Der zweite Linearantrieb ist mit der Schiebefassung verbunden.

Mit diesen bekannten Mikroskopobjektiven können jedoch höchstens zwei die Abbildung beeinflussende Parameter oder durch die Umwelt bedingte Parameter und Bildfehler durch Verstellung zweier Optikglieder des Mikroskopobjektivs korrigiert oder kompensiert werden. In der Praxis ist es jedoch häufig unumgänglich, den Einfluss unterschiedlicher Deckglasdicken und verschiedener Immersionmedien auf die Abbildungsgüte und zusätzlich auch noch Umwelteinflüsse, wie beispielsweise die Temperatur, zu beachten und durch entsprechende Korrekturen weitestgehend zu kompensieren.

So liegt der Erfindung die Aufgabe zu Grunde, ein Mikroskopobjektiv mit Korrekturfassungen zu schaffen, mit welchem bei guter Korrektur der Bildfehler und bei Einhaltung einer geringen Baulänge des Objektivs eine Einstellung zwecks Kompensation von mindestens drei, die Abbildungsgüte beeinflussenden Parametern möglich ist.

Erfindungsgemäß wird diese Aufgabe bei einem nach dem Oberbegriff gestalteten Mikroskopobjektiv mit den kennzeichnenden Merkmalen des ersten Anspruches gelöst.

In den Unteransprüchen sind weitere Ausgestaltungen und Einzelheiten des Mikroskopobjektivs offenbart.

So ergibt sich eine vorteilhafte Ausgestaltung bei einer kleinen Baulänge des gesamten Objektivs, wenn eine Hauptfassung, die mit einer innen liegenden Zylinderhülse mit axial gerichteten Durchbrüchen fest verbunden ist; axial verstellbare Korrekturfassungen zur Aufnahme optischer Glieder in Form von Linsen und/oder Linsengruppen, wobei die Korrekturfassungen in der Zylinderhülse gelagert sind und an denen außen jeweils ein, durch einen zugeordneten Durchbruch der Zylinderhülse hindurch greifender, radial gerichteter Bolzen oder Schraube angeordnet ist; mit jeweils einem Bolzen in Wirkverbindung stehende, mit einem Außengewinde gleicher oder unterschiedlicher Steigung versehene Gewinderinge, welche nur axial verschiebbar auf der Zylinderhülse gelagert sind und in ein Innengewinde entsprechender Steigung von jeweils den Gewinderingen zugeordneten Mitnahmeringen eingreifen, die um die optische Achse drehbar in der Hauptfassung angeordnet sind und mit mindestens einem außen an der Hauptfassung angeordneten Einstellring in Wirkverbindung stehen und mit diesem gedreht werden können.

Um eine stets spielfreie Verbindung zwischen einem Bolzen und dem zugeordneten Gewindering zu erreichen, greifen die Bolzen in eine durch mindestens einen federnden Steg gebildete, zum Rand des jeweils zugeordneten Gewinderinges hin offene Bohrung spielfrei ein.

Um stets eine Klemmung des Bolzens in der Bohrung zu realisieren, ist vorteilhaft der Durchmesser der Bohrung kleiner als der oder gleich dem Durchmesser des in die Bohrung des Gewinderinges eingreifenden Teiles des jeweiligen Bolzens.

Eine spielfreie Verbindung zwischen dem Bolzen und dem dazugehörigen Gewindering ergibt sich auch vorteilhaft, wenn zwischen dem Bolzen und der Wand der Bohrung des Gewinderinges ein elastisches Zwischenglied vorgesehen ist.

Dabei ist es vorteilhaft, wenn die mit einem Einstellring in Wirkverbindung stehenden Mitnahmeringe fest miteinander verbunden und gemeinsam durch den Einstellring um die optische Achse drehbar sind.

Eine vorteilhafte Anordnung mit vielen Verstellmöglichkeiten für die optischen Glieder ergibt sich, wenn mehrere Einstellringe vorgesehen sind, welche jeweils mit mindestens einem Mitnahmering in Wirkverbindung stehen, wobei vorteilhaft die einzelnen Einstellringe unabhängig voneinander um die optische Achse des Objektivs gedreht werden können.

Um unterschiedliche axiale Verstellwege der einzelnen Korrekturfassungen realisieren zu können, ist es von Vorteil, wenn die einem Einstellring zugeordneten Mitnahmeringe Gewinde gleicher oder unterschiedlicher Steigung aufweisen. Damit kann unterschiedlichen Korrekturbedingungen bei dem Objektiv Rechnung getragen werden.

Ferner ist es vorteilhaft, wenn zur Beseitigung des Spiels oder des toten Ganges im Gewinde zwischen den Mitnahmeringen und den zugeordneten Gewinderingen Federelemente angeordnet sind.

Vorteilhaft sind hier Druckfedern oder Elemente, welche die Funktion einer Druckfeder ausüben können, einsetzbar.

Es ist ferner vorteilhaft, wenn ein dem Schutz des Objektes dienendes Sicherheitselement mit der vorderen Korrekturfassung verbunden und mit dieser zusammen axial bewegbar ist.

Vor allem zur Begrenzung des Verdrehbereiches des Einstellringes durch feste Anschläge ist es vorteilhaft, dass an einer im Innern des Einstellringes gelegenen Stirnfläche ein axial gerichteter Stift vorgesehen ist, daß in einer, im Innern des Objektivs gelegenen weiteren Stirnfläche der Hauptfassung ein sich über einen Umfangsbereich erstreckender Ausbruch vorgesehen ist, dessen Begrenzungsflächen Anschläge für den Stift bilden, und daß der Einstellring auf seiner Außenfläche eine Markierung und die Hauptfassung eine Skala mit Einstellmarken besitzen.

Dabei ist es vorteilhaft, wenn die Positionen des axial gerichteten Stiftes und die Positionen der Anschläge zur Markierung des Einstellringes orientiert sind.

Die Erfindung dient dazu, in einem Mikroskopobjektiv eine optische Korrektur durch axiale Verschiebung von drei oder mehr Optikgliedern mit Hilfe von sich radial bewegenden Gewinderingen mit Gewinden gleicher oder unterschiedlicher Steigung, also ohne die sonst üblichen Kurvenringe und ohne spiralförmige Nuten in einzelnen Ringen zu verwenden, zu realisieren.

Weiterhin können auch neben den optischen Korrekturen Anpassungen an unterschiedliche Beobachtungsbedingungen vorgenommen werden. So wird das Arbeiten mit unterschiedlichen Immersionsmedien, z.B. Glyzerin oder Wasser, und auch in unterschiedlichen Temperaturbereichen, z.B. bei 23°C oder 37°C, und das Mikroskopieren mit verschiedenen Deckgläsern unterschiedlicher Dicke und Toleranz wesentlich erleichtert. Weiterhin ist bei diesem Objektiv eine geringe Baulänge in der Größenordnung von 50 mm erreichbar. Bei einem geringen Arbeitsabstand vom etwa 0,18 mm ist auch ein zuverlässiger Präparate- oder Objektschutz in einfacher Weise realisierbar.

Die Erfindung soll nachstehend an einem Ausführungsbeispiel näher erläutert werden. In der Zeichnung zeigen:
- Fig.1: einen teilweisen Längsschnitt durch ein erfindungsgemäßes Mikroskopobjektiv,
- Fig. 2: ein weiteres Fassungsteil des vorderen optischen Gliedes,
- Fig. 3: ein Fassungsteil des vorderen optischen Gliedes,
- Fig. 4: einen Gewindering mit geöffneter Bohrung und federnden Stegen,
- Fig. 5: einen Gewindering mit eingreifendem Bolzen,
- Fig. 6: einen Gewindering mit Bolzen und elastischem Element,
- Fig. 7: eine Ansicht eines Objektivs mit Hauptfassung und Einstellring,
- Fig. 8: ein Objektiv mit geöffnetem Einstellring,

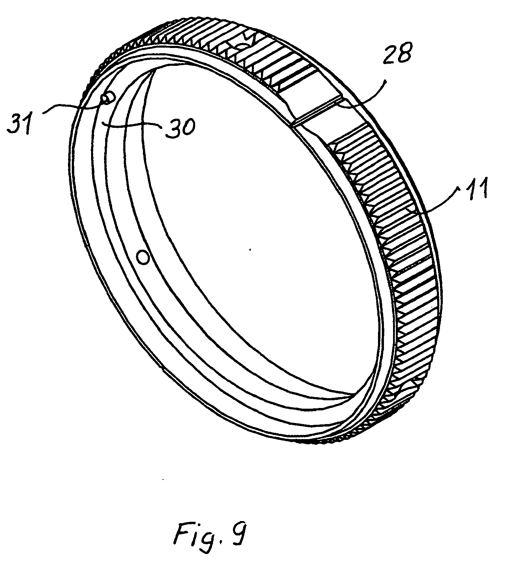

- Fig. 9: einen Einstellring und
- Fig. 10: die Hauptfassung mit Ausbruch und Skala.

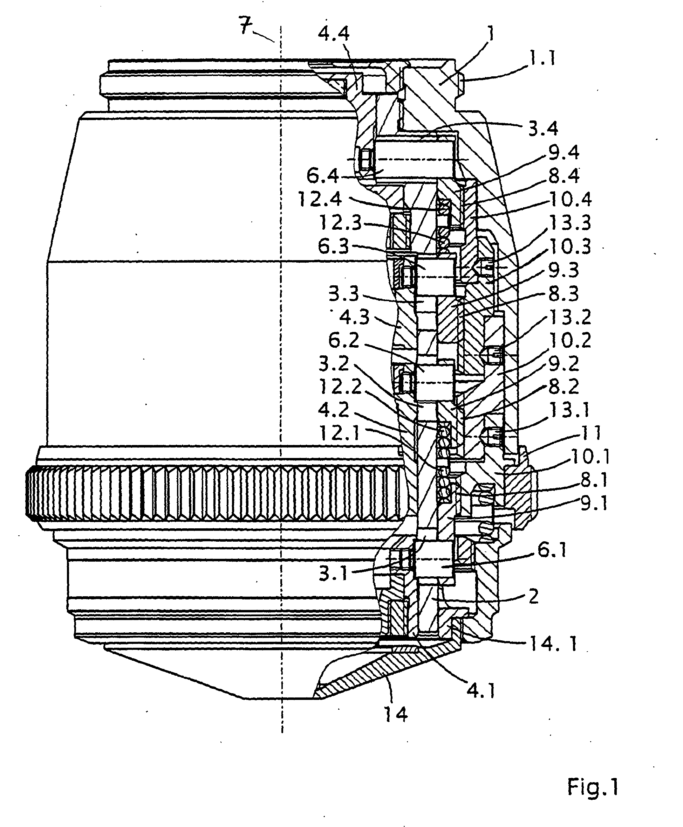

Das in Fig.1 in einem Teilschnitt dargestellte Mikroskopobjektiv umfasst eine mit einem Einschraubgewinde 1.1 versehene Hauptfassung 1 mit einer fest mit dieser verbundenen, innen liegenden Zylinderhülse 2, welche axial gerichtete Durchbrüche 3.1 bis 3.4 besitzt und in der präzise, axial verstellbare Korrekturfassungen 4.1 bis 4.4 angeordnet sind. In diesem Ausführungsbeispiel sind vier Korrekturfassungen 4.1 bis 4.4 vorgesehen. Grundsätzlich ist es auch denkbar, mehr als vier, jedoch mindestens drei Korrekturfassungen vorzusehen. Entsprechend der Anzahl der im Objektiv vorhandenen Korrekturfassungen besitzt die Zylinderhülse 2 auch eine entsprechende Anzahl von Durchbrüchen. Auch die Anzahl der mit den Korrekturfassungen zusammen wirkenden Bauteile richtet sich nach der Anzahl der Korrekturfassungen. In diesen Korrekturfassungen 4.1 bis 4.4 sind die einzelnen optischen Glieder (nicht dargestellt) fest gefasst, welche aus einzelnen Linsen und/oder aus Linsengruppen bestehen. An den einzelnen Korrekturfassungen 4.1 bis 4.4 ist außen jeweils ein, durch einen zugeordneten Durchbruch 3.1 bis 3.4 der Zylinderhülse 2 hindurch reichender (greifender), radial gerichteter Bolzen 6.1 bis 6.4 oder eine Schraube angeordnet. Ein jeder dieser Bolzen 6.1 bis 6.4 steht mit einem ihm zugeordneten Gewindering 9.1 bis 9.4 in Wirkverbindung. Diese Gewinderinge 9.1 bis 9.4 besitzen jeweils ein Außengewinde 8.1 bis 8.4 und sind nur axial verstellbar auf der Zylinderhülse 2 gelagert. Nach außen hin sind die Gewinderinge 9.1 bis 9.4 von Mitnahmeringen 10.1 bis 10.4 umgeben, welche in der Hauptfassung 1 angeordnet und mit jeweils einem Innengewinde entsprechender Steigung versehen sind, wobei diese Innengewinde mit den zugeordneten Außengewinden 8.1 bis 8.4 der Gewinderinge 9.1 bis 9.4 in Wirkverbindung stehen.

Die Gewinderinge 9.1 bis 9.4 und die Mitnahmeringe 10.1 bis 10.4 können Gewinde gleicher oder unterschiedlicher Steigung besitzen, so dass bei gleicher Drehung der Mitnahmeringe 10.1 bis 10.4 um die optische Achse 7 des Objektivs die drehfesten Gewinderinge 9.1 bis 9.4 unterschiedliche Verschiebungen in Richtung der optischen Achse 7 ausführen.

Die einzelnen Mitnahmeringe 10.1 bis 10.4 sind vorteilhaft durch Schrauben 13.1 bis 13.3 oder Stifte miteinander verbunden und stehen mit mindestens einem, von außen zu betätigenden und um die optische Achse 7 drehbaren Einstellring 11 in Wirkverbindung.

Bei dem Mikroskopobjektiv nach Fig.1 ist ein Einstellring 11 vorgesehen, mit welchem die Mitnahmeringe 10.1 bis 10.4 gleichzeitig und gemeinsam um gleiche Drehungen verstellt werden können. Denkbar ist jedoch auch ein Objektiv (nicht dargestellt), welches mehrere Einstellringe besitzt, wobei dann einem Einstellring ein oder mehrere Mitnahmeringe zugeordnet sind, mit denen verschiedene axiale Verschiebungen der Korrekturfassungen mit den darin gefassten optischen Gliedern ausgeführt werden können.

Objektseitig besitzt das Objektiv ein dem Objekt- oder Präparateschutz dienendes Sicherungselement 14, welches über ein Zwischenteil 14.1 mit der vorderen Korrekturfassung 4.1 verbunden ist und mit dieser zusammen axial bewegt wird.

Um das Spiel oder den toten Gang zwischen den miteinander im Eingriff stehenden Gewinden der Mitnahmeringe 10.1 bis 10.4 und der zugeordneten Gewinderinge 9.1 bis 9.4 zu eliminieren, sind Federelemente 12.1 bis 12.4 vorgesehen, welche die Gewindeflanken der in Wirkverbindung stehenden Gewinde der betreffenden Gewinde- und Mitnahmeringe stets gegeneinander drücken.

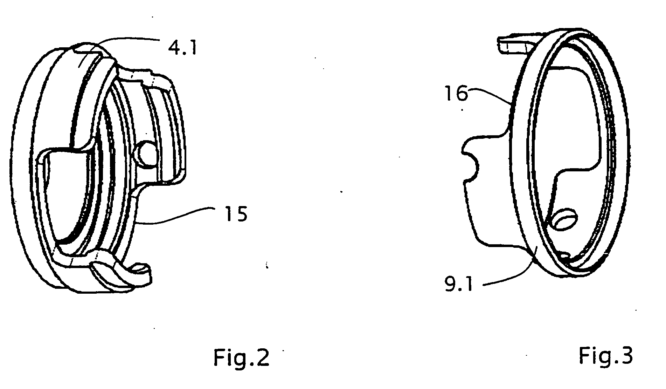

Insbesondere bei der Realisierung einer geringen Objektivlänge in der Größenordnung von 50 mm und darunter erfordern der Objekt- und Präparateschutz und die axial beweglichen Korrekturfassungen 4.1 bis 4.4 besondere Maßnahmen. Hierzu sind die Korrekturfassung 4.1 des vorderen optischen Gliedes (Fig.2) und der zugeordnete erste Gewindering 9.1 (Fig.3) mit Aussparungen 15 und 16 versehen. Damit wird ein ungehindertes Ineinandergleiten des Gewinderinges 9.1 und der Korrekturfassung 4.1 bei gleichzeitiger präziser Führung der Korrekturfassung 4.1 und des Gewinderinges 9.1 ermöglicht. Bei Objektiven mit einer größeren Baulänge kann auf derart ineinander eingreifende, Raum sparende Bauteile verzichtet werden.

Eine Verstellung der Korrekturfassungen 4.1 bis 4.4 wird in folgender Weise realisiert:
Die Korrekturfassungen 4.1 bis 4.4, in denen die optischen Glieder (nicht dargestellt) gefasst sind, und die die Außengewinde 8.1 bis 8.4 tragenden Gewinderinge 9.1 bis 9.4 sind durch die Bolzen 6.1 bis 6.4 verbunden. Diese Bolzen 6.1 bis 6.4 sind durch die axialen Durchbrüche 3.1 bis 3.4 der fest in der Hauptfassung 1 angeordneten Zylinderhülse 2 hindurch geführt und besitzen somit zusammen mit den Gewinderingen 9.1 bis 9.4 und den Korrekturfassungen 4.1 bis 4.4 nur eine Verstell- bzw. Verschiebungsmöglichkeit in Richtung der optischen Achse 7. Eine Drehung um die Achse 7 ist nicht möglich. Durch Drehung des Einstellringes 11 um die optische Achse 7 werden die miteinander verbundenen Mitnahmeringe 10.1 bis 10.4 mit um die Achse 7 gedreht. Durch Drehung der Mitnahmeringe 10.1 bis 10.4 mittels des Einstellringes 11 wird infolge des Zusammenwirkens des Innengewindes dieser Mitnahmeringe mit den entsprechenden Außengewinden 8.1 bis 8.4 der verdrehfest angeordneten Gewinderinge 9.1 bis 9.4 eine axiale Verstellung der Korrekturfassungen 4.1 bis 4.4 und der darin gefassten optischen Glieder realisiert.

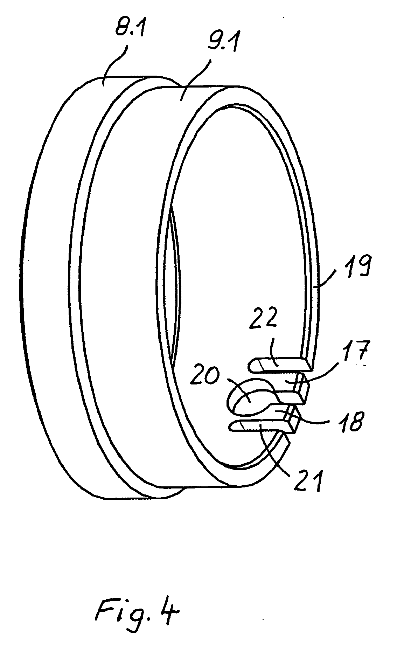

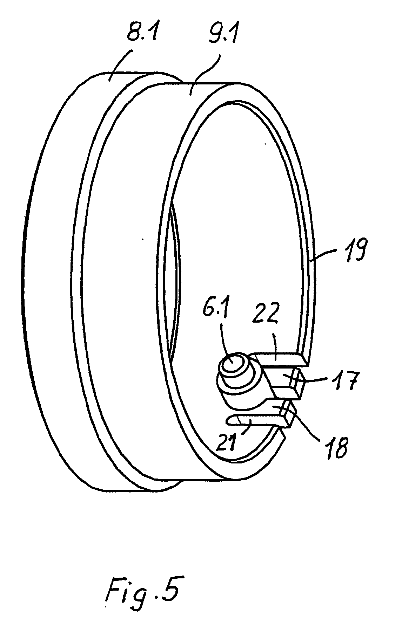

Fig. 4 und Fig. 5 zeigen am Beispiel des Gewinderinges 9.1 und des Bolzens 6.1 wie eine erfindungsgemäße spielfreie Verbindung zwischen diesen beiden Bauteilen realisiert ist. Insbesondere bei hochwertigen mikroskopischen Objektives ist eine solche Verbindung zur Erzielung einer nahezu fehlerfreien Abbildung unbedingt notwendig. Bei einer solchen Verbindung greift der in der Korrekturfassung 4.1 eingeschraubte und radial gerichtete Bolzen 6.1 in eine in axialer Richtung zum Rand 19 hin des Gewinderinges 9.1 frei gefräste Bohrung 20 ein. Diese Bohrung 20 ist durch zwei, durch Ausfräsungen 21 und 22 des Gewinderinges 9.1 erzeugte, federnde Stege 17; 18 gebildet. Durch die federnden Stege 17 und 18 entsteht im Gewindering 9.1 eine Klemmung des Bolzens 6.1. Die Schäfte dieser Stege 17; 18 ist vorteilhaft in ihrer Stärke so dimensioniert, dass sie sich nicht durch die Bewegung des Bolzens 6.1 und anderer Teile des Objektives weiter spreizen lassen. Der jeweilige Bolzen 6.1 bis 6.4 ist in der ihm jeweils zugeordneten Bohrung spielfrei angeordnet. Als weiterer positiver Effekt entsteht in der Bohrung 20 eine Dreipunktanlage des Bolzens 20, wodurch eine präzise Führung im jeweiligen Gewindering entsteht.

Möglich wäre es auch, nur einen federnden Steg vorzusehen. Die Herstellung gestaltete sich dadurch günstiger. Jedoch würde die Dreipunktanlage dadurch verloren gehen.

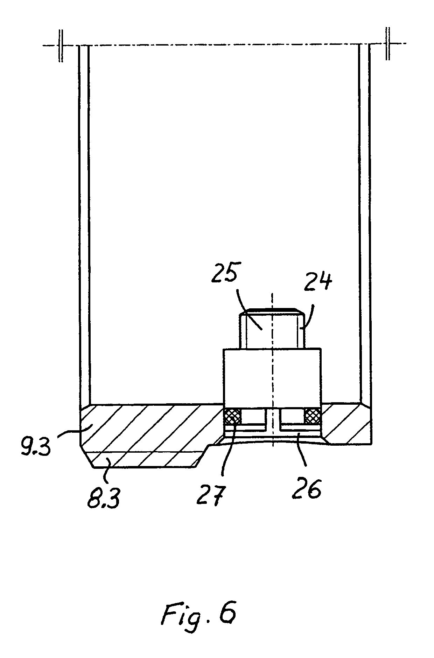

Fig. 6 soll anhand des Gewinderinges 9.3 und des Bolzens 6.3 näher erläutert werden. Der Bolzen 6.3, welcher mit seinem, mit Gewinde 24 versehenen Ende 25 in der Korrekturfassung 4.3 (in Fig. 6 nicht dargestellt) eingeschraubt ist, greift in eine Bohrung 26 des zugeordneten, mit dem Gewinde 8.3 versehenen Gewinderinges 9.3 ein. Zwischen dem Bolzen 6.3 und der Wand der Bohrung 26 ist ein elastisches, die Spielfreiheit gewährleistendes Zwischenglied 27 angeordnet. Im Ausführungsbeispiel hat dieses Zwischenglied 27 die Form eines Rundringes. Andere geeignete Gestaltungen des Zwischengliedes 27 sind ebenfalls möglich.

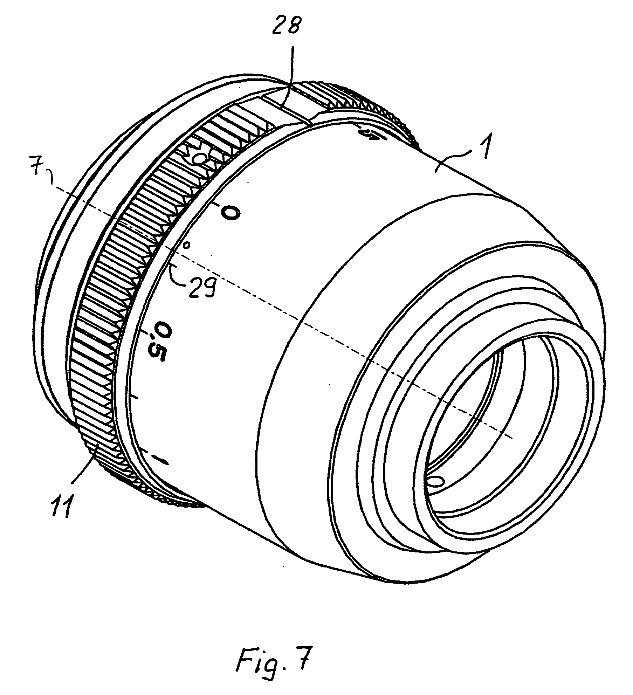

Das in der Fig. 7 räumlich dargestellte Mikroskopobjektiv umfasst unter anderem die Hauptfassung 1 und den daran verdrehbar gelagerten Einstellring 11, welcher eine Markierung 28 besitzt. An der Hauptfassung 1 sind Einstellmarken 29 angeordnet, welche beispielsweise der Anpassung des Objektives an unterschiedliche Deckgläser oder auch an unterschiedliche Umweltbedingungen dienen können.

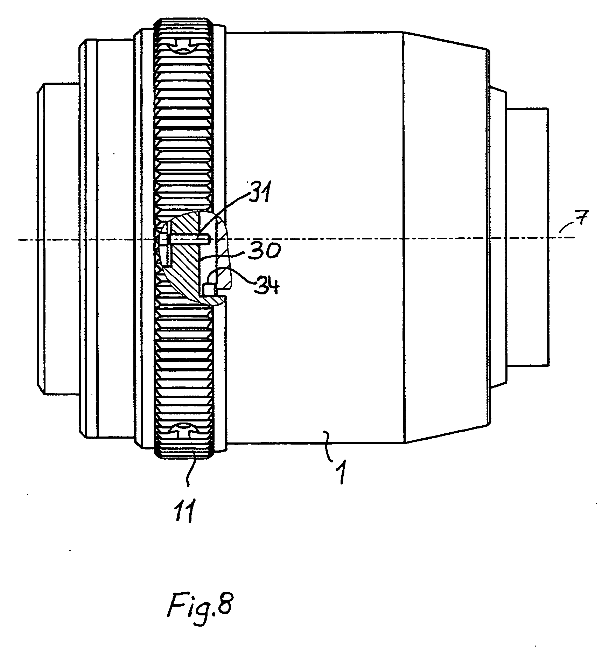

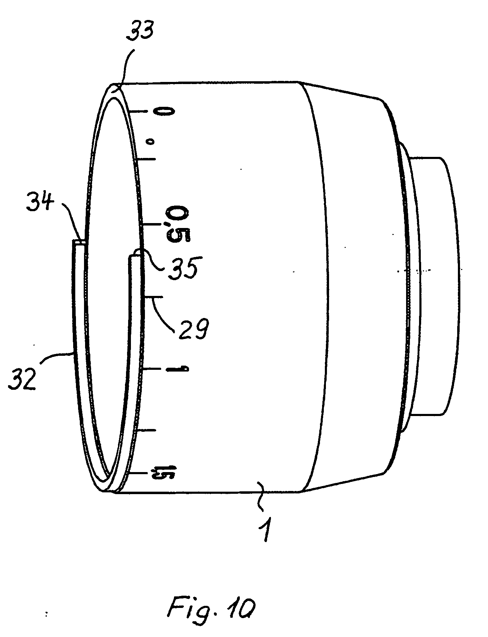

In den Fig. 7 und 8 ist veranschaulicht, dass an einer in Innern des Einstellringes 11 gelegenen Stirnfläche 30 ein axial gerichteter Stift 31, vorzugsweise in einer Bohrung angeordnet ist. Dieser Stift 31 ist in einer definierten Position zur Markierung des Einstellringes 11 angeordnet. Die Hauptfassung 1 besitzt in ihrem Inneren an einer Stirnfläche 32 (Fig. 10) einen sich über einen Umfangsbereich erstreckenden Ausbruch 33, dessen Begrenzungsflächen als Anschläge 34; 35 für den Stift 31 bei der Verdrehung des Einstellringes 11 relativ zur Hauptfassung 1 dienen. Die Begrenzung des Ausbruches 33, also die Anschläge 34; 35 sind ebenfalls zu der Markierung 28 des Einstellringes 11 orientiert. Der Winkel des Ausbruches 33 der Hauptfassung 1 bestimmt die Weite des Überlaufes, welcher vorteilhaft ein Überfahren der Nulleinstellmarke in beiden Richtungen in engen Grenzen erlaubt. Die Gleichmäßigkeit des Überlaufes ist automatisch durch die jeweilige Orientierung des Ausbruches 33 zur jeweiligen Einstellmarke 29 der Hauptfassung 1 gegeben. Durch diese Maßnahme werden ohne zusätzliche Teile ein gleichmäßiger Überlauf und 7und feste Anschläge 34; 35 zur Begrenzung der Verdrehung des Einstellringes 11 erzielt. Diese Anordnung ist auf alle Mikroskopobjektive mit einem oder mehreren Einstellringen anwendbar, so z. B. auch Mikroobjektive mit Irisblende.

### Bezugszeichenliste

- 1: Hauptfassung
- 2: Zylinderhülse
- 3.1 bis 3.4: Durchbrüche
- 4.1 bis 4.4: Korrekturfassungen
- 6.1 bis 6.4: Bolzen
- 7: optische Achse
- 8.1 bis 8.4: Außengewinde
- 9.1 bis 9.4: Gewinderinge
- 10.1 bis 10.4: Mitnahmeringe
- 11: Einstellring
- 12.1 bis 12.4: Federelemente
- 13.1 bis 13.4: Schrauben
- 14: Sicherungselement
- 14.1: Zwischenteil
- 15, 16: Aussparungen
- 17, 18: Stege
- 19: Rand
- 20: Bohrung
- 21; 22: Ausfräsungen
- 24: Gewinde
- 25: Ende
- 26: Bohrung
- 27: Zwischenglied
- 28: Markierung
- 29: Einstellmarke
- 30: Stirnfläche
- 31: Stift
- 32: Stirnfläche
- 33: Ausbruch
- 34; 35: Anschläge

## Patentansprüche

1. Mikroskopobjektiv mit axial verstellbaren Korrekturfassungen (4.1 bis 4.4) zur Anpassung an unterschiedliche, die Abbildungsgüte beeinflussende Parameter, wobei die axiale Verstellung der Korrekturfassungen (4.1 bis 4.4) relativ zu einer feststehenden Hauptfassung (1) von einem außen an der Hauptfassung (1) angeordneten Einstellring (11) über einen in der jeweiligen Korrekturfassung (4.1 bis 4.4) angeordneten, radial zur optischen Achse des Objektivs gerichteten, in Durchbrüchen von Gewinderingen (9.1 bis 9.4) eingreifenden Bolzen (6.1 bis 6.4) realisierbar ist, wobei das Objektiv mindestens drei Korrekturfassungen (4.1 bis 4.4) aufweist und die Korrekturfassungen (4.1 bis 4.4) durch den mindestens einen Einstellring (11) ohne eine zusätzliche Drehung um die optische Achse (7) des Objektivs in Richtung dieser Achse (7) verstellbar sind **dadurch gekennzeichnet, dass** die Bolzen (6.1 bis 6.4) in eine durch mindestens einen federnden Steg (17 oder 18) gebildete, zum Rand (19) des jeweils zugeordneten Gewinderinges (9.1 bis 9.4) offene Bohrung (20) spielfrei eingreifen.

2. Mikroskopobjektiv nach Anspruch 1, umfassend eine Hauptfassung (1), die mit einer innen liegenden Zylinderhülse (2) mit axial gerichteten Durchbrüchen (3.1 bis 3.4) fest verbunden ist,
axial verstellbare Korrekturfassungen (4.1 bis 4.4) zur Aufnahme optischer Glieder, welche in der Zylinderhülse (2) axial verschiebbar gelagert sind und an denen außen jeweils ein, durch einen zugeordneten Durchbruch (3.1 bis 3.4) der Zylinderhülse (2) hindurch reichender, radial gerichteter Bolzen (6.1 bis 6.4) oder Schraube angeordnet ist, wobei
mit jeweils einem Bolzen (6.1 bis 6.4) in Wirkverbindung stehende, mit einem Außengewinde (8.1 bis 8.4) gleicher oder unterschiedlicher Steigung versehene Gewinderinge (9.1 bis 9.4), welche nur axial verschiebbar auf der Zylinderhülse (2) gelagert sind und in ein Innengewinde entsprechender Steigung von jeweils den Gewinderingen (9.1 bis 9.4) zugeordneten Mitnahmeringen (10.1 bis 10.4) eingreifen, die um die optische Achse (7) drehbar in der Hauptfassung (1) angeordnet sind und mit mindestens einem außen an der Hauptfassung (1) angeordneten Einstellring (11) in Wirkverbindung stehen und mit diesem gedreht werden können.

3. Mikroskopobjektiv nach Anspruch 2, **dadurch gekennzeichnet, dass** die mit einem Einstellring (11) in Wirkverbindung stehenden Mitnahmeringe (10.1 bis 10.4) fest miteinander verbunden und gemeinsam durch den Einstellring (11) um die optische Achse (7) drehbar sind.

4. Mikroskopobjektiv nach einem der Ansprüche 1 bis 3, **dadurch gekennzeichnet, dass** mehrere Einstellringe (11) vorgesehen sind, welche jeweils mit mindestens einem Mitnahmering (10.1 bis 10.4) in Wirkverbindung stehen.

5. Mikroskopobjektiv nach einem der Ansprüche 1 bis 4, **dadurch gekennzeichnet, dass** die einem Einstellring (11) zugeordneten Mitnahmeringe (10.1 bis 10.4) Gewinde gleicher oder unterschiedlicher Steigung aufweisen.

6. Mikroskopobjektiv nach einem der Ansprüche 1 bis 5, **dadurch gekennzeichnet, dass** zur Beseitigung des Spiels oder des toten Ganges im Gewinde zwischen den Mitnahmeringen (10.1 bis 10.4) und den zugeordneten Gewinderingen (9.1 bis 9.4) Federelemente (12.1 bis 12.4) angeordnet sind.

7. Mikroskopobjektiv nach Anspruch 6, **dadurch gekennzeichnet, dass** die Federelemente (12.1 bis 12.4) Druckfedern sind.

8. Mikroskopobjektiv nach einem der Ansprüche 1 bis 7, **dadurch gekennzeichnet, dass** mit der vorderen Korrekturfassung (4.1) ein dem Schutz des Objektes dienendes Sicherheitselement (14) verbunden ist, welches mit der Korrekturfassung (4.1) zusammen axial bewegbar ist.

9. Mikroskopobjektiv nach Anspruch 1, **dadurch gekennzeichnet, dass** der Durchmesser der Bohrung (20) kleiner als der oder gleich dem Durchmesser des in die Bohrung (20) eingreifenden Teiles des jeweiligen Bolzens (6.1 bis 6.4) ist.

10. Mikroskopobjektiv nach Anspruch 1, **dadurch gekennzeichnet, dass** zwischen dem Bolzen (6.1 bis 6.4) und der zugehörigen Bohrung (20) des jeweiligen Gewinderinges (9.1 bis 9.4) ein elastisches Zwischenglied vorgesehen ist.

11. Mikroskopobjektiv nach einem der Ansprüche 1 bis 8, **dadurch gekennzeichnet, dass** an einer im Innern des Einstellringes (11) gelegenen Stirnfläche (30) ein axial gerichteter Stift (31) vorgesehen ist,
dass in einer, im Innern des Objektivs gelegenen, weiteren Stirnfläche (32) der Hauptfassung (1) ein sich über einen Umfangsbereich erstreckender Ausbruch (33) vorgesehen ist, dessen Begrenzungsflächen Anschläge (34; 35) für den Stift (31) bilden,
und dass der Einstellring (11) eine Markierung (28) und die Hauptfassung (1) über mindestens einen Teil ihres Umfanges eine Skala mit Einstellmarken (29) besitzen.

12. Mikroskopobjektiv nach Anspruch 11, **dadurch gekennzeichnet, dass** die Positionen des axial gerichteten Stiftes (31) und die Positionen der Anschläge (34; 35) zur Markierung (28) des Einstellringes (11) orientiert sind.

## Claims

1. Microscope objective with axially adjustable corrective mounts (4.1 to 4.4) for adapting to different parameters influencing the imaging quality, the axial adjustment of the corrective mounts (4.1 to 4.4) relative to a fixed main mount (1) being implementable by a setting ring (11) arranged outside on the main mount (1) via a bolt (6.1 to 6.4) which is arranged in the respective corrective mount (4.1 to 4.4), is directed radially relative to the optical axis of the objective and engages in openings in threaded rings (9.1 to 9.4), the objective having at least three corrective mounts (4.1 to 4.4), and the corrective mounts (4.1 to 4.4) being adjustable in the direction of the optical axis (7) by means of the at least one setting ring (11) without an additional rotation about said optical axis (7), **characterized in that** the bolts (6.1 to 6.4) engage without play in an open bore (20) which is formed by at least one resilient web (17 or 18) and is open towards the edge (19) of the respectively assigned threaded ring (9.1 to 9.4).

2. Microscope objective according to Claim 1, comprising a main mount (1) which is fixedly connected to an inner cylindrical sleeve (2) with axially directed openings (3.1 to 3.4), and
axially adjustable corrective mounts (4.1 to 4.4) for holding optical elements which are axially displaceably mounted in the cylindrical sleeve (2), and on which there is respectively arranged outside a radially directed bolt (6.1 to 6.4) or screw reaching through an assigned opening (3.1 to 3.4) in the cylindrical sleeve (2), and comprising
threaded rings (9.1 to 9.4) which are respectively operationally connected to a bolt (6.1 to 6.4), are provided with an outer thread (8.1 to 8.4) of the same or different pitch, are supported only axially displaceably on the cylindrical sleeve (2), and engage in an inner thread, of corresponding pitch, of driving rings (10.1 to 10.4) which are respectively assigned to the threaded rings (9.1 to 9.4), are arranged rotatably about the optical axis (7) in the main mount (1) and are operationally connected to at least one setting ring (11), arranged outside on the main mount (1), and can be rotated together with said setting ring.

3. Microscope objective according to Claim 2, **characterized in that** the driving rings (10.1 to 10.4) are operationally connected to a setting ring (11), are fixedly connected to one another and can be rotated together about the optical axis (7) by the setting ring (11).

4. Microscope objective according to one of Claims 1 to 3, **characterized in that** a plurality of setting rings (11) are provided which are respectively operationally connected to at least one driving ring (10.1 to 10.4).

5. Microscope objective according to one of Claims 1 to 4, **characterized in that** the driving rings (10.1 to 10.4) assigned to a setting ring (11) have threads of the same or different pitch.

6. Microscope objective according to one of Claims 1 to 5, **characterized in that** spring elements (12.1 to 12.4) are arranged for the purpose of removing the play or the dead travel in the thread between the driving rings (10.1 to 10.4) and the assigned threaded rings (9.1 to 9.4).

7. Microscope objective according to Claim 6, **characterized in that** the spring elements (12.1 to 12.4) are pressure springs.

8. Microscope objective according to one of Claims 1 to 7, **characterized in that** connected to the front corrective mount (4.1) is a safety element (14) which serves to protect the object and which can be moved axially together with the corrective mount (4.1).

9. Microscope objective according to Claim 1, **characterized in that** the diameter of the bore (20) is less than or equal to the diameter of the part, engaging in the bore (20), of the respective bolt (6.1 to 6.4).

10. Microscope objective according to Claim 1, **characterized in that** an elastic intermediate element is provided between the bolt (6.1 to 6.4) and the associated bore (20) of the respective threaded ring (9.1 to 9.4).

11. Microscope objective according to one of Claims 1 to 8, **characterized in that** an axially directed pin (31) is provided on an end face (30) situated in the interior of the setting ring (11), **in that** provided in a further end face (32), situated in the interior of the objective, of the main mount (1) is a cutout (33) which extends over a peripheral region and whose bounding surfaces form stops (34; 35) for the pin (31), and **in that** the setting ring (11) has a marking (28), and the main mount (1) has a scale with setting marks (29) over at least a part of its circumference.

12. Microscope objective according to Claim 11, **characterized in that** the positions on the axially directed pin (31) and the positions of the stops (34; 35) are orientated in relation to the marking (28) of the setting ring (11).

## Revendications

1. Objectif de microscope avec des montures de correction axialement ajustables (4.1 à 4.4) pour l'adaptation à différents paramètres influençant la qualité de reproduction, dans lequel le réglage axial des montures de correction (4.1 à 4.4) par rapport à une monture principale fixe (1) est réalisable au moyen d'une bague de réglage (11) disposée à l'extérieur de la monture principale (1) par l'intermédiaire d'un goujon (6.1 à 6.4) disposé dans la monture de correction (4.1 à 4.4) respective, dirigé radialement par rapport à l'axe optique de l'objectif, engrenant dans des percées de bagues filetées (9.1 à 9.4), dans lequel l'objectif comporte au moins trois montures de correction (4.1 à 4.4) et les montures de correction (4.1 à 4.4) pouvant être réglées au moyen d'au moins une bague de réglage (11) sans rotation supplémentaire autour de l'axe optique (7) de l'objectif en direction de cet axe (7),
**caractérisé en ce que** les goujons (6.1 à 6.4) engrènent sans jeu dans un perçage (20) formé par au moins une traverse élastique (17, 18), ouverte sur le bord (19) de la bague filetée (9.1 à 9.4) respectivement correspondante.

2. Objectif de microscope selon la revendication 1, comportant
une monture principale (1) reliée solidement à une douille cylindrique (2) reposant à l'intérieur avec des percées (3.1 à 3.4) orientées radialement,
des montures de correction axialement ajustables (4.1 à 4.4) pour l'accueil d'éléments optiques reposant dans la douille cylindrique (2) de manière à pouvoir coulisser axialement et disposés à l'extérieur du goujon respectif dirigé radialement (6.1 à 6.4) ou de la vis, passant à travers une percée correspondante (3.1 à 3.4) de la douille cylindrique (2),
dans lesquelles des bagues filetées (9.1 à 9.4) reposant dans la douille cylindrique (2) de manière à ne pouvoir coulisser qu'axialement et avec un pas de vis correspondant au filetage interne des bagues d'entrainement (10.1 à 10.4) correspondant aux bagues filetées (9.1 à 9.4) respectives, engrènent avec un goujon respectif (6.1 à 6.4) en liaison active, avec un filetage externe (8.1 à 8.4) pourvu d'un pas de vis identique ou différent, les bagues d'entrainement (10.1 à 10.4) étant disposées dans la monture principale (1) de manière à pouvoir pivoter autour de l'axe optique (7) et en liaison active avec au moins une bague de réglage (11) disposée à l'extérieur de la monture principale (1) et pouvant pivoter avec celle-ci.

3. Objectif de microscope selon la revendication 2, **caractérisé en ce que** les bagues d'entrainement (10.1 à 10.4) en liaison active avec une bague de réglage (11) sont reliées solidement entre elles et peuvent pivoter ensemble au moyen de la bague de réglage (11) autour de l'axe optique (7).

4. Objectif de microscope selon une des revendications 1 à 3, **caractérisé en ce qu'**on a prévu plusieurs bagues de réglage (11) en liaison active avec au moins une bague d'entrainement (10.1 à 10.4) respective.

5. Objectif de microscope selon une des revendications 1 à 4, **caractérisé en ce que** les bagues d'entrainement (10.1 à 10.4) correspondant à une bague de réglage (11) comportent des filetages de pas de vis identique ou différent.

6. Objectif de microscope selon une des revendications 1 à 5, **caractérisé en ce qu'**on dispose des éléments de ressorts (12.1 à 12.4) pour éliminer le jeu ou le point mort du filetage entre les bagues d'entrainement (10.1 à 10.4) et les bagues filetées (9.1 à 9.4) correspondantes.

7. Objectif de microscope selon la revendication 6, **caractérisé en ce que** les éléments de ressorts (12.1 à 12.4) sont des ressorts de compression.

8. Objectif de microscope selon une des revendications 1 à 7, **caractérisé en ce qu'**un élément de sécurité (14) servant à la protection de l'objet est relié à la monture de correction avant (4.1) et est axialement mobile ensemble avec la monture de correction (4.1).

9. Objectif de microscope selon la revendication 1, **caractérisé en ce que** le diamètre du perçage (20) est inférieur ou égal au diamètre de la partie du goujon respectif (6.1 à 6.4) engrenant dans le perçage (20).

10. Objectif de microscope selon la revendication 1, **caractérisé en ce qu'**on a prévu un élément intermédiaire élastique entre le goujon (6.1 à 6.4) et le perçage (20) correspondant de la bague filetée respective (9.1 à 9.4).

11. Objectif de microscope selon une des revendications 1 à 8, **caractérisé en ce qu'**on a prévu une broche (31) dirigée axialement sur la surface frontale (30) située à l'intérieur de la bague de réglage (11),
**en ce qu'**on a prévu une encoche (33) s'étendant sur un domaine du périmètre d'une autre surface frontale (32) de la monture principale (1) située à l'intérieur de l'objectif, dont les surfaces de limitation forment des butées (34 ; 35) pour la broche (31),
et **en ce que** la bague de réglage (11) possède un marquage (28) et la monture principale (1) possède une échelle avec des graduations (29) sur au moins une partie de son périmètre.

12. Objectif de microscope selon la revendication 11, **caractérisé en ce que** les positions de la broche (31) dirigée axialement et les positions des butées (34 ; 35) sont orientées vers le marquage (28) de la bague de réglage (11).
